# FASCICULE DE BREVET EUROPEEN

(11) **EP 3 728 451 B1**
(45) Date de publication et mention de la délivrance du brevet: **02.02.2022**
(21) Numéro de dépôt: 18833921.2
(22) Date de dépôt: 12.12.2018
(51) Int. Cl.: C08L 9/00, B60C 1/00, C08L 15/00

(54) **BANDE DE ROULEMENT DE PNEUMATIQUE DONT LE SYSTÈME DE RÉTICULATION EST À BASE DE PEROXYDE ORGANIQUE**
REIFENLAUFFLÄCHE MIT EINEM VERNETZERSYSTEM AUF BASIS EINES ORGANISCHEN PEROXIDS
TIRE TREAD HAVING A CROSSLINKING SYSTEM BASED ON ORGANIC PEROXIDE

(30) Priorité: 19.12.2017 FR 1762501
(43) Date de publication de la demande: 28.10.2020
(73) Titulaire: COMPAGNIE GENERALE DES ETABLISSEMENTS MICHELIN, 63000 Clermont-Ferrand (FR)
(72) Inventeur: LABRUNIE, Philippe, 63040 CLERMONT-FERRAND CEDEX 9 (FR)
(74) Mandataire: Wroblewski, Nicolas Paul André
(86) Numéro de dépôt international: PCT/FR2018/053212
(87) Numéro de publication internationale: WO 2019/122600

(56) Documents cités:
- EP-A1- 1 380 604
- FR-A1- 2 967 680
- FR-A1- 3 014 443
- US-A1- 2010 036 018

## Description

L'invention est relative à des bandes de roulement de pneumatiques destinées notamment aux véhicules de tourisme.

Les bandes de roulement de pneumatique doivent obéir à un grand nombre d'exigences techniques, souvent antinomiques, parmi lesquelles figurent notamment la résistance au roulement, l'adhérence, l'usure, la rigidité des compositions cuites (associée au comportement routier et au confort de conduite), en même temps que les propriétés de cuisson et la viscosité des compositions à l'état cru (associées à la facilité de mise en œuvre industrielle des compositions, ou processabilité).

Ainsi, les concepteurs de pneumatiques sont constamment à la recherche de solutions permettant de faire évoluer le compromis de propriétés existant en améliorant au moins une propriété du pneumatique, sans pour autant pénaliser les autres.

Pour améliorer le compromis d'adhérence sur sol mouillé et sur sol sec, il a été proposé de dans la demande WO 2017/095563, une composition comprenant un système de réticulation à base de peroxyde dans une matrice élastomérique comprenant de 80 à 100 pce d'un élastomère à base de polybutadiène fonctionnalisé comprenant de 8 à 15% en poids d'unités vinyle et au moins 30% en poids de liaison *trans,* et dont la température de transition vitreuse est comprise entre -100°C et -80°C.

Par ailleurs, l'utilisation de peroxydes en tant que système de réticulation dans des compositions de caoutchouc a tendance à augmenter le Mooney des compositions à cru ce qui peut engendrer des difficultés de mise en œuvre industrielle (processabilité) des compositions de caoutchouc, notamment lors de la préparation de semi-finis, tels que des bandes de roulement pour pneumatique.

Or, il demeure toujours avantageux d'améliorer, en plus de l'adhérence sur sol mouillé et sur sol sec, la processabilité et les propriétés d'adhérence sur sol enneigé et la résistance au roulement des compositions de l'art antérieur précitées.

Poursuivant ses recherches, la Demanderesse a découvert de façon surprenante qu'une composition spécifique permet de répondre à ces besoins.

Ainsi, la présente invention a notamment pour objet une bande de roulement pour pneumatique comprenant une composition de caoutchouc à base d'au moins :
- de 50 à 100 pce d'un premier élastomère diénique, le première élastomère diénique étant un élastomère à base de polybutadiène, modifié avec un groupe fonctionnel capable d'interagir avec de la silice en tant que charge renforçante,
- optionnellement de 0 à 50 pce d'un deuxième élastomère diénique différent du premier élastomère diénique,
- entre 40 et 90 pcede silice en tant que charge renforçante,
- un agent de couplage,
- un système plastifiant comprenant une résine plastifiante présentant une température de transition vitreuse supérieure à 20°C,
- un système de réticulation à base de peroxyde organique,
le taux total du premier élastomère diénique et du second élastomère diénique dans la composition étant compris dans un domaine allant de 80 à 100 pce.

La présente invention a également pour objet un pneumatique pourvu d'une bande de roulement selon l'invention.

L'invention ainsi que ses avantages seront aisément compris à la lumière de la description et des exemples de réalisation qui suivent.

### I- DÉFINITIONS

Par l'expression "partie en poids pour cent parties en poids d'élastomère" (ou pce), il faut entendre au sens de la présente invention, la partie, en masse pour cent parties en masse d'élastomères, qu'ils soient thermoplastiques ou non. En d'autres termes, les élastomères thermoplastiques sont des élastomères.

Dans la présente, sauf indication expresse différente, tous les pourcentages (%) indiqués sont des pourcentages (%) en masse.

D'autre part, tout intervalle de valeurs désigné par l'expression "entre a et b" représente le domaine de valeurs allant de plus de a à moins de b (c'est-à-dire bornes a et b exclues) tandis que tout intervalle de valeurs désigné par l'expression "de a à b" signifie le domaine de valeurs allant de a jusqu'à b (c'est-à-dire incluant les bornes strictes a et b). Dans la présente, lorsqu'on désigne un intervalle de valeurs par l'expression "de a à b", on désigne également et préférentiellement l'intervalle représenté par l'expression "entre a et b".

Dans la présente, par l'expression composition "à base de", on entend une composition comportant le mélange et/ou le produit de réaction des différents constituants utilisés, certains de ces constituants pouvant réagir et/ou étant destinés à réagir entre eux, au moins partiellement, lors des différentes phases de fabrication de la composition.

Lorsqu'on fait référence à un composé "majoritaire", on entend au sens de la présente invention, que ce composé est majoritaire parmi les composés du même type dans la composition, c'est-à-dire que c'est celui qui représente la plus grande quantité en masse parmi les composés du même type, par exemple plus de 50%, 60%, 70%, 80%, 90%, voire 100% en poids par rapport au poids total du type de composé. Ainsi, par exemple, une charge renforçante majoritaire est la charge renforçante représentant la plus grande masse par rapport à la masse totale des charges renforçantes dans la composition.

Dans le cadre de l'invention, les composés comprenant du carbone mentionnés dans la description, peuvent être d'origine fossile ou biosourcés. Dans ce dernier cas, ils peuvent être, partiellement ou totalement, issus de la biomasse ou obtenus à partir de matières premières renouvelables issues de la biomasse. Sont concernés notamment les polymères, les plastifiants, les charges, etc.

Toutes les valeurs de température de transition vitreuse « Tg » décrite dans la présente sont mesurées de manière connue par DSC (Differential Scanning Calorimetry) selon la norme ASTM D3418 (1999).

### II- DESCRIPTION DE L'INVENTION

### II-1 Matrice élastomérique

Selon l'invention, la composition de la bande de roulement du pneumatique comprend au moins de 50 à 100 pce d'un premier élastomère diénique, le première élastomère diénique étant un élastomère à base de polybutadiène, modifié avec un groupe fonctionnel capable d'interagir avec de la silice en tant que charge renforçante, et optionnellement de 0 à 50 pce d'un deuxième élastomère diénique, étant entendu que le taux total du premier élastomère diénique et du second élastomère diénique dans la composition étant compris dans un domaine allant de 80 à 100 pce.

### II-1.1 Premier élastomère diénique

Dans la présente, sauf indication contraire, lorsque l'on emploie l'expression «premier élastomère diénique », on fait référence à élastomère à base de polybutadiène, modifié avec un groupe fonctionnel capable d'interagir avec de la silice en tant que charge renforçante. De tels élastomères et leur procédé d'obtention sont décrits notamment dans les documents brevets US 5,977,238, WO 2009/133068, EP 0 778 311 B1, WO 2008/141702, WO 2006/050486, EP 0877 047 B1, EP 1 400 559 B1, JP 63-215701, JP 62-227908 ou US 5 409 969. Le premier élastomère diénique peut également être un mélange de deux, voire plus, élastomères à base de polybutadiène, modifiés avec un groupe fonctionnel capable d'interagir avec de la silice en tant que charge renforçante.

De manière avantageuse, le groupe fonctionnel capable d'interagir avec de la silice en tant que charge renforçante du premier élastomère diénique est au moins un (c'est-à-dire un ou plusieurs) groupe alkoxysilane lié à l'élastomère par son atome de silicium. Dans la présente demande, on utilise le terme « le groupe alkoxysilane » pour désigner au moins, c'est-à-dire un ou plusieurs, groupe alkoxysilane lié à l'élastomère par son atome de silicium.

Selon l'invention, le groupe alkoxysilane du premier élastomère diénique peut se situer en extrémité de la chaîne élastomère.

Alternativement, et de manière avantageuse, le groupe alkoxysilane se situe à l'intérieur (ou « dans ») la chaîne élastomère, on dira alors que le premier élastomère diénique est couplé (ou encore fonctionnalisé) en milieu de chaîne, par opposition à la position "en extrémité de chaîne", et ce, bien que le groupement ne se situe pas précisément au milieu (ou « au centre ») de la chaîne élastomère. L'atome de silicium de cette fonction lie les deux branches principales de la chaîne élastomère du premier élastomère diénique.

Le groupe alkoxysilane peut être porteur d'une autre fonction portée de préférence par le silicium du groupe alkoxysilane, directement (c'est-à-dire par via une liaison covalente) ou par l'intermédiaire d'un groupe espaceur défini comme étant un atome ou un radical hydrocarboné divalent, linéaire ou ramifié, aliphatique en C₁-C₁₈, saturé ou non, cyclique ou non, ou un radical hydrocarboné divalent aromatique en C₆-C₁₈.

L'autre fonction est de préférence une fonction comprenant au moins un hétéroatome choisi parmi N, S, O, P. On peut, à titre d'exemple, citer parmi ces fonctions, les amines primaires, secondaires ou tertiaires, cycliques ou non, les isocyanates, les imines, les cyano, les thiols, les carboxylates, les époxydes, les phosphines primaires, secondaires ou tertiaires.

Ainsi, à titre de fonction amine secondaire ou tertiaire, on peut citer les amines substituées par des radicaux alkyle en C₁-C₁₀, de préférence alkyle en C₁-C₄, plus préférentiellement un radical méthyle ou éthyle, ou alors les amines cycliques formant un hétérocycle contenant un atome d'azote et au moins un atome de carbone, de préférence de 2 à 6 atomes de carbone. Par exemple, conviennent les groupements métylamino-, diméthylamino-, éthylamino-, diéthylamino-, propylamino-, dipropylamino-, butylamino-, dibutylamino-, pentylamino-, dipentylamino-, hexylamino-, dihexylamino-, hexaméthylèneamino-, de préférence les groupements diéthylamino- et diméthylamino-.

A titre de fonction imine, on peut citer les cétimines. Par exemple, conviennent les groupements (1,3-diméthylbutylidène)amino-, (éthylidène)amino-, (1-méthylpropylidène)amino-, (4-N,N-diméthylaminobenzylidène)amino-, (cyclohexylidène)amino-, dihydroimidazole et imidazole.

Ainsi, à titre de fonction carboxylate, on peut citer les acrylates ou les méthacrylates. Une telle fonction est de préférence un méthacrylate.

A titre de fonction époxyde, on peut citer les groupements époxy ou glycidyloxy.

A titre de fonction phosphine secondaire ou tertiaire, on peut citer les phosphines substituées par des radicaux alkyle en C₁-C₁₀, de préférence alkyle en C₁-C₄, plus préférentiellement un radical méthyle ou éthyle, ou alors la diphénylphosphine. Par exemple, conviennent les groupements métylphosphino-, diméthylphosphino-, éthylphosphino-, diéthylphosphino, éthylméthylphosphino- et diphénylphosphino-.

De manière particulièrement avantageuse, le groupe alkoxysilane est porteur d'une fonction amine. Dans ce cas, le groupe alkoxysilane peut également être dénommé « groupe alkoxysilane portant une fonction aminé » ou « groupe amino-alkoxysilane », les deux expressions ayant la même signification. La fonction amine peut être une fonction amine primaire, secondaire ou tertiaire. Préférentiellement, la fonction amine est une fonction amine tertiaire, de préférence choisie parmi la diéthylamine et la diméthylamine.

La fonction amine primaire, secondaire ou tertiaire peut être portée, directement (par une liaison covalente) par l'atome de silicium du groupe alkoxysilane du premier élastomère diénique, ou par l'intermédiaire d'un groupe espaceur. Le groupe espaceur peut être notamment un radical hydrocarboné divalent, linéaire ou ramifié, d'alkyle en C₁₋₁₀, d'aryle en C₆₋₁₈ ou d'aralkyle en C₇₋₁₈. De préférence le groupe espaceur est un radical hydrocarboné linéaire en C₂₋₃.

Selon l'invention, le groupe alkoxysilane portant la fonction amine primaire, secondaire ou tertiaire peut répondre à l'une des formules (I) à (III) suivantes : 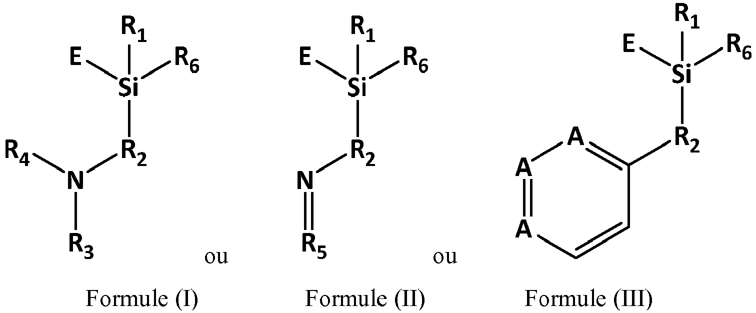 dans lesquelles :
- E désigne le premier élastomère diénique,
- R₁ et R₆, identiques ou différents, désignent le premier élastomère diénique ou un atome d'oxygène substitué par un atome d'hydrogène ou un radical alkyle, linéaire ou ramifié, en C₁₋₁₀, cycloalkyle en C₅₋₁₈, aryle en C₆₋₁₈ ou aralkyle en C₇₋₁₈ ;
- R₂ est un radical hydrocarboné divalent, linéaire ou ramifié, d'alkyle en C₁₋₁₀, d'aryle en C₆₋₁₈ ou d'aralkyle en C₇₋₁₈ ;
- R₃ et R₄, identiques ou différents, représentent un atome d'hydrogène ou un radical alkyl en C₁₋₁₀, sous réserve que lorsque l'un de R₃ et R₄ représente un atome d'hydrogène l'autre soit différent, ou alors R₃ et R₄ forment avec N auquel ils sont liés un hétérocycle contenant un atome d'azote et au moins un atome de carbone ;
- R₅ représente un radical alkylidène, linéaire ou ramifié, en C₁₋₁₀ ;
- les symboles A désignent, indépendamment les uns des autres, un atome d'azote ou un atome de carbone, sous réserve que l'un au moins des symboles A désigne un atome d'azote.

Avantageusement, le groupe alkoxysilane portant la fonction amine primaire, secondaire ou tertiaire répond à l'une des formules (I) à (III) ci-dessus dans lesquelles :
- R₁ représente atome d'oxygène substitué par un radical méthyl ou éthyle ; et/ou
- R₂ représente le radical éthane-1,2-diyl ou propane-1,3-diyl ; et/ou,
- R₃ et R₄, identiques ou différents, représentent un radical méthyle ou éthyle ; et/ou
- R₅ représente un radical alkylidène, linéaire ou ramifié, en C₄-₆; et/ou
- un seul A désigne un atome d'azote et est situé en position méta ou para du cycle par rapport à -R₂ ; et/ou
- R₆ désigne le premier élastomère diénique.

Le premier élastomère diénique portant un groupe amino-alkoxysilane lié à l'élastomère diénique par l'atome de silicium tel que défini dans la présente, peut être préparé par des techniques connues de l'homme du métier, par exemple selon un procédé approprié décrit dans la demande WO 2009/133068 ou la demande WO 2017/060395.

Le procédé de préparation du premier élastomère diénique portant un groupe amino-alkoxysilane lié à l'élastomère diénique par l'atome de silicium tel que défini dans la présente, peut notamment comprendre une étape de stripping en vue de récupérer l'élastomère sous forme sèche. Cette étape de stripping peut avoir pour effet d'hydrolyser tout ou partie des fonctions alcoxysilanes hydrolysables dudit copolymère pour les transformer en fonctions silanol. Par exemple, au moins 50% molaire des fonctions peuvent ainsi être hydrolysées.

Ainsi, selon l'invention, le groupe alkoxysilane du premier élastomère diénique portant un groupe amino-alkoxysilane lié à l'élastomère diénique par l'atome de silicium tel que défini dans la présente, peut être partiellement ou totalement hydrolysé en silanol.

Selon l'invention, le groupe fonctionnel capable d'interagir avec de la silice en tant que charge renforçante du premier élastomère diénique peut également être au moins une fonction SiOR, R étant l'hydrogène ou un radical hydrocarboné, notamment un alkyle, ayant préférentiellement 1 à 12 atomes de carbone, en particulier méthyle ou éthyle. Dans la présente demande, on utilise le terme « la fonction SiOR » pour désigner au moins une fonction SiOR, c'est-à-dire une ou plusieurs fonctions SiOR.

On entend par radical hydrocarboné, un groupement monovalent essentiellement constitué d'atomes de carbone et d'hydrogène, un tel groupement pouvant comporter au moins un hétéroatome, sachant que l'ensemble constitué par les atomes de carbone et d'hydrogène représente la fraction numérique majoritaire dans le radical hydrocarboné.

Le radical hydrocarboné peut être un alkyle, ramifié ou linéaire ou encore cyclique, ayant 1 à 12 atomes de carbone, plus préférentiellement de 1 à 6 atomes de carbone, encore plus préférentiellement de 1 à 4 atomes de carbone, en particulier un méthyle ou un éthyle. Le radical R peut également être un alkoxyalkyle, plus particulièrement ayant 2 à 8 atomes de carbone.

La fonction SiOR portée par le premier élastomère diénique peut se situer le long de la chaîne élastomère comme groupe pendant, à une extrémité de la chaîne élastomère ou bien à l'intérieur même de la chaîne élastomère. Dans le cas où il y a plusieurs fonctions SiOR portées par l'élastomère, elles peuvent occuper l'une ou l'autre des configurations ci-dessus.

Avantageusement, le radical R de la fonction SiOR portée par le premier élastomère diénique est un atome d'hydrogène (fonction dite « silanol » de formule SiOH).. La fonction silanol SiOH est préférentiellement située en extrémité de chaîne de l'élastomère diénique, en particulier sous la forme d'un groupement diméthylsilanol -SiMe₂SiOH.

La fonction silanol peut être liée à un polysiloxane qui constitue l'un des blocs d'un copolymère bloc comprenant aussi un bloc polydiène, comme par exemple décrit dans le brevet EP 0 778 311 B1. Elle peut également être liée à un polyéther constituant l'un des blocs d'un copolymère bloc comprenant aussi un bloc polydiène, comme décrit par exemple dans la demande WO 2009/000750.

Quel que soit le groupe fonctionnel capable d'interagir avec de la silice en tant que charge renforçante du premier élastomère diénique, le premier élastomère diénique peut également présenter étoilage supplémentaire par réaction avec un agent d'étoilage connu en soi par exemple à base d'étain ou de silicium. De préférence, le copolymère à base de styrène et de butadiène est fonctionnalisé à l'étain (Sn), c'est-à-dire qu'ils comportent une liaison C-Sn (appelée aussi fonctionnalisation Sn). Ils peuvent être fonctionnalisés simplement (liaison C-Sn en bout de chaine), couplés (atome Sn entre deux chaines) et/ou étoilés (atome Sn entre 3 chaines ou plus) avec un agent de fonctionnalisation, de couplage et/ou d'étoilage. De manière générique on parle pour rassembler tous ces élastomères liés à de l'étain, d'élastomères fonctionnalisés à l'étain. Ces élastomères sont connus de l'homme du métier, par exemple ceux décrits dans la demande WO 2011/042507.

De manière particulière avantageuse, le premier élastomère diénique est un copolymère à base de styrène et de butadiène.

Au sens de la présente invention on appelle copolymère à base de styrène et de butadiène tout copolymère obtenu par copolymérisation d'un ou plusieurs composés styréniques avec un ou plusieurs butadiène(s). A titre de monomères styrènes conviennent notamment le styrène, les méthylstyrènes, le para-tertiobutylstyrène, les méthoxystyrènes, les chlorostyrènes. A titre de monomères butadiènes conviennent notamment le butadiène-1,3, le 2-méthyl-1,3-butadiène, les 2,3-di(alkyle en C₁-C₅)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène et un aryl-1,3-butadiène. Ces élastomères peuvent avoir toute microstructure qui est fonction des conditions de polymérisation utilisées, notamment de la présence ou non d'un agent modifiant et/ou randomisant et des quantités d'agent modifiant et/ou randomisant employées. Les élastomères peuvent être par exemple à blocs, statistiques, séquencés, microséquencés.

Selon l'invention, le premier élastomère diénique est avantageusement un copolymère styrène-butadiène (SBR).

Préférentiellement, le copolymère à base de styrène et de butadiène est constitué de monomères de styrène et de monomères de butadiène, c'est-à-dire que la somme des pourcentages molaires de monomères de styrène et de monomères butadiène est égale à 100%.

On notera que le SBR peut être préparé en émulsion (ESBR) ou en solution (SSBR). Qu'il s'agisse de ESBR ou de SSBR, le SBR peut être de toute microstructure. On peut utiliser notamment un SBR ayant une faible teneur en styrène, par exemple comprise de plus de 0 à 10%, une teneur en styrène moyenne, par exemple comprise entre 10% et 35% en poids, ou une teneur en styrène élevée, par exemple de 35 à 55%, une teneur en liaisons vinyliques de la partie butadiénique comprise entre 4 % et 70%, et une Tg inférieure à -40°C, de préférence inférieur à -50°C.

De préférence, le premier élastomère diénique est un copolymère styrène-butadiène présente l'une quelconque, avantageusement la combinaison de deux ou trois, encore plus avantageusement la totalité, des caractéristiques suivantes :
- il est un copolymère styrène-butadiène préparé en solution (SSBR),
- sa teneur massique en styrène par rapport au poids total du copolymère styrène-butadiène est comprise entre 1 et 15%, de préférence entre 1 et 4 %,
- sa teneur en liaisons vinyliques de la partie butadiénique comprise entre 4 et 25%, de préférence entre 10 et 15%,
- sa Tg est inférieure à -60°C, de préférence comprise entre -100°C et -80°C.

Avantageusement, le taux du premier élastomère diénique dans la composition de la bande de roulement du pneumatique selon l'invention est compris dans un domaine allant de 80 à 100 pce. Il peut être par exemple de 80 à 95 pce, par exemple de 80 à 90 pce.

### II-1.2 Deuxième élastomère diénique

Bien que cela ne soit pas nécessaire pour la mise en œuvre de la présente invention, la matrice élastomérique de la composition de la bande de roulement selon l'invention peut contenir de manière minoritaire un ou plusieurs élastomères diéniques différents (appelé ci-après « deuxième élastomère diénique » dans un souci de simplification de rédaction) du premier élastomère diénique utilisé dans le cadre de la présente invention. Par exemple, le deuxième élastomère diénique peut être choisi, par exemple, dans le groupe des élastomères diéniques fortement insaturés constitué par les polybutadiènes (en abrégé "BR") différents du premier élastomère diénique utilisé dans le cadre de la présente invention, le caoutchouc naturel (NR), le polyisoprène de synthèse (IR), les copolymères de butadiène, les copolymères d'isoprène (autre que IIR) et les mélanges de ces élastomères. De tels copolymères peuvent par exemple être choisis dans le groupe constitué par les copolymères de butadiène-styrène (SBR) différents du premier élastomère diénique utilisé dans le cadre de la présente invention, les copolymères d'isoprène-butadiène (BIR), les copolymères d'isoprène-styrène (SIR), les copolymères d'isoprène-butadiène-styrène (SBIR), les copolymères de butadiène-acrylonitrile (NBR), les copolymères de butadiène-styrène-acrylonitrile (NSBR) ou un mélange de deux ou plus de ces composés. De manière avantageuse, le deuxième élastomère diénique est un polybutadiène. De manière avantageuse également, le deuxième élastomère diénique est du caoutchouc nature, un polyisoprène de synthèse ou leurs mélanges, de préférence du caoutchouc naturel.

Avantageusement, le taux du deuxième élastomère diénique dans la composition de la bande de roulement du pneumatique selon l'invention est compris dans un domaine allant de 0 à 20 pce. Il peut être par exemple de 5 à 20 pce, par exemple de 10 à 20 pce.

La matrice élastomérique peut également contenir de manière minoritaire tout type d'élastomère synthétique autre que diénique, voire avec des polymères autres que des élastomères, par exemple des polymères thermoplastiques. De préférence, matrice élastomérique ne contient pas d'élastomère synthétique autre que diénique ni de polymère autre que des élastomères ou en contient moins de 10 pce, de préférence moins de 5 pce.

De préférence, le taux du premier élastomère diénique dans la composition est compris dans un domaine allant de 80 à 100 pce, et le taux du second élastomère diénique dans la composition est compris dans un domaine allant de 0 à 20 pce.

Avantageusement, le taux total du premier élastomère diénique et du deuxième élastomère diénique dans la composition de la bande de roulement du pneumatique selon l'invention est compris dans un domaine allant de 80 à 100 pce, de préférence 90 à 100 pce, de préférence encore de 95 à 100 pce.

De manière particulièrement avantageuse, le taux total du premier élastomère diénique et du deuxième élastomère diénique dans la composition de la bande de roulement du pneumatique selon l'invention est de 100 pce.

### II-2 Charge renforçante

La composition de la bande de roulement selon l'invention à comme caractéristique essentielle de contenir entre 40 et 90 pce de silice en tant que charge renforçante et un agent de couplage.

Par "silice en tant que charge renforçante", doit être entendu ici de la silice (SiO₂), capable de renforcer à elle seule, sans autre moyen qu'un agent de couplage intermédiaire, une composition de caoutchouc destinée à la fabrication de bandages pneumatiques ; une telle charge se caractérise généralement, de manière connue, par la présence de groupes hydroxyle (-OH) à sa surface.

La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Degussa, les silices « Zeosil » 1165MP, 1135MP et 1115MP de la société Rhodia, la silice « Hi-Sil » EZ150G de la société PPG, les silices « Zeopol » 8715, 8745 et 8755 de la Société Huber, les silices à haute surface spécifique telles que décrites dans la demande WO 03/16387. La surface spécifique BET de la silice est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1 heure à 160°C - domaine de pression relative p/po : 0.05 à 0.17). La surface spécifique CTAB de la silice est déterminée selon la norme française NF T 45-007 de novembre 1987 (méthode B).

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

L'homme du métier peut trouver des exemples d'agent de couplage dans les documents suivants: WO 02/083782, WO 02/30939, WO 02/31041, WO 2007/061550, WO 2006/125532, WO 2006/125533, WO 2006/125534, US 6 849 754, WO 99/09036, WO 2006/023815, WO 2007/098080, WO 2010/072685 et WO 2008/055986.

L'agent de couplage peut être notamment un agent de couplage organosilane n'ayant pas d'atome de soufre, ayant un groupe disulfure, trisulfure ou tétrasulfure, ou ayant un groupe mercapto. Par exemple, l'agent de couplage peut être choisi dans le groupe comprenant ou constitué par le disulfure de 3,3'-bis(triéthoxysilylpropyl), le disulfure de 3,3'-bis(tri-t-butoxysilylpropyl), le disulfure de 3.3'-bis(propyl-diéthoxysilylpropyl), le disulfure de 2,2'-bis (diméthylmethoxysilylethyl), et leurs mélanges. L'agent de couplage peut également être choisi dans le groupe constitué par ou comprenant le 3-mercaptopropyltrimethoxysilane, le 2-mercaptoethyltrimeth-oxysilane, le 2-mercaptodimethylmethoxysilane et leurs mélange. Il peut également être choisi dans le groupe constitué par ou comprenant le 3-glycidoxypropyl méthyldimethoxy silane, le vinyltriméthoxysilane, le 3-méthacryloxypropyl méthyldimethoxysilane et leurs mélanges.

La teneur en agent de couplage représente avantageusement de 0,5% à 15% en poids par rapport à la quantité de charge inorganique renforçante, de préférence de 4 à 12%, de préférence encore de 6 à 10% en poids par rapport à la quantité de charge inorganique renforçante. Typiquement, le taux d'agent de couplage est inférieur à 15 pce, préférentiellement compris dans un domaine allant de 2 à 10 pce, de préférence de 3 à 9 pce. Ce taux peut aisément être ajusté par l'homme du métier selon le taux de charge inorganique utilisé dans la composition.

La composition de caoutchouc du pneumatique selon l'invention peut également contenir, en complément des agents de couplage, des activateurs de couplage, des agents de recouvrement des charges inorganiques ou plus généralement des agents d'aide à la mise en œuvre susceptibles de manière connue, grâce à une amélioration de la dispersion de la charge dans la matrice de caoutchouc et à un abaissement de la viscosité des compositions, d'améliorer leur faculté de mise en œuvre à l'état cru, ces agents étant par exemple des silanes hydrolysables tels que des alkylalkoxysilanes (notamment des alkyltriéthoxysilanes), des polyols, des polyéthers (par exemple des polyéthylèneglycols), des amines primaires, secondaires ou tertiaires (par exemple des trialcanol-amines), des POS hydroxylés ou hydrolysables, par exemple des α,ω-dihydroxy-polyorganosiloxanes (notamment des α,ω-dihydroxypolydiméthylsiloxanes), des acides gras comme par exemple l'acide stéarique.

Bien que cela ne soit pas nécessaire à la mise en œuvre de la présente invention, la composition de caoutchouc de la bande de roulement du pneumatique selon l'invention, peut comporter du noir de carbone. Selon l'invention, la composition de la bande de roulement ne comprend pas de noir de carbone, ou en comprend moins de 50 pce, de préférence, moins de 20 pce, de préférence encore moins de 10 pce (par exemple entre 0,5 et 20 pce, notamment entre 1 et 10 pce, par exemple entre 2 et 5 pce). Dans les intervalles indiqués, on bénéficie des propriétés colorantes (agent de pigmentation noire) et anti-UV des noirs de carbone, sans pénaliser par ailleurs les performances typiques apportées par la charge inorganique renforçante.

Les noirs utilisables dans le cadre de la présente invention peuvent être tout noir conventionnellement utilisé dans les pneumatiques ou leurs bandes de roulement (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés. Les noirs de carbone pourraient être par exemple déjà incorporés à l'élastomère diénique, notamment isoprénique sous la forme d'un masterbatch (voir par exemple demandes WO 97/36724 ou WO 99/16600). La surface spécifique BET des noirs de carbone est mesurée selon la norme D6556-10 [méthode multipoints (au minimum 5 points) - gaz : azote - domaine de pression relative P/P0 : 0.1 à 0.3].

De manière particulièrement avantageuse, le taux total de charge renforçante est compris entre 40 et 110 pce, de préférence entre 44 et 96 pce.

### II-3 Système plastifiant

La composition de caoutchouc de la bande de roulement du pneumatique selon l'invention comprend en outre un système plastifiant comprenant une résine plastifiante présentant une température de transition vitreuse supérieure à 20°C, dite « haute Tg », (également dénommée « résine plastifiante » dans la présente dans un souci de simplification de rédaction »).

### II-3.1 Résine plastifiante

La dénomination « résine » est réservée dans la présente demande, par définition connue de l'homme du métier, à un composé qui est solide à température ambiante (23°C), par opposition à un composé plastifiant liquide tel qu'une huile.

Les résines plastifiante sont des polymères bien connus de l'homme du métier, essentiellement à base de carbone et hydrogène mais pouvant comporter d'autres types d'atomes, utilisables en particulier comme agents plastifiants ou agents tackifiants dans des matrices polymériques. Elles sont généralement par nature miscibles (i.e., compatibles) aux taux utilisés avec les compositions de polymères auxquelles elles sont destinées, de manière à agir comme de véritables agents diluants. Elles ont été décrites par exemple dans l'ouvrage intitulé *"*Hydrocarbon Resins" de R. Mildenberg, M. Zander et G. Collin (New York, VCH, 1997, ISBN 3-527-28617-9) dont le chapitre 5 est consacré à leurs applications, notamment en caoutchouterie pneumatique (5.5. *"Rubber Tires and Mechanical Goods").* Elles peuvent être aliphatiques, cycloaliphatiques, aromatiques, aromatiques hydrogénées, du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Leur Tg est de préférence supérieure à 20°C (le plus souvent comprise entre 30°C et 95°C).

De manière connue, ces résines plastifiantes peuvent être qualifiées aussi de résines thermoplastiques en ce sens qu'elles se ramollissent par chauffage et peuvent ainsi être moulées. Elles peuvent se définir également par un point ou température de ramollissement (en anglais, *"softening point"*)*.* La température de ramollissement d'une résine plastifiante est généralement supérieure d'environ 50 à 60°C à sa valeur de Tg. Le point de ramollissement est mesuré selon la norme ISO 4625 (méthode « Ring and Ball »). La macrostructure (Mw, Mn et Ip) est déterminée par chromatographie d'exclusion stérique (SEC) comme indiqué ci-après. Pour rappel, l'analyse SEC, par exemple, consiste à séparer les macromolécules en solution suivant leur taille à travers des colonnes remplies d'un gel poreux ; les molécules sont séparées selon leur volume hydrodynamique, les plus volumineuses étant éluées en premier. L'échantillon à analyser est simplement préalablement solubilisé dans un solvant approprié, le tétrahydrofurane à une concentration de 1 g/litre. Puis la solution est filtrée sur un filtre de porosité 0,45 µm, avant injection dans l'appareillage. L'appareillage utilisé est par exemple une chaîne chromatographique "Waters alliance" selon les conditions suivantes :
- solvant d'élution est le tétrahydrofurane,
- température 35°C ;
- concentration 1 g/litre ;
- débit : 1 ml/min ;
- volume injecté : 100 µl ;
- étalonnage de Moore avec des étalons de polystyrène ;
- jeu de 3 colonnes "Waters" en série ("Styragel HR4E", "Styragel HR1" et "Styragel HR 0.5") ;
- détection par réfractomètre différentiel (par exemple "WATERS 2410") pouvant être équipé d'un logiciel d'exploitation (par exemple "Waters Millenium").

Un étalonnage de Moore est conduit avec une série d'étalons commerciaux de polystyrène à faible Ip (inférieur à 1,2), de masses molaires connues, couvrant le domaine de masses à analyser. On déduit des données enregistrées (courbe de distribution massique des masses molaires) la masse molaire moyenne en masse (Mw), la masse molaire moyenne en nombre (Mn), ainsi que l'indice de polymolécularité (Ip = Mw/Mn).

Toutes les valeurs de masses molaires indiquées dans la présente demande sont donc relatives à des courbes d'étalonnages réalisées avec des étalons de polystyrène.

Selon un mode de réalisation préférentiel de l'invention, la résine plastifiante présente au moins une quelconque, de préférence 2 ou 3, plus préférentiellement l'ensemble, des caractéristiques suivantes :
- une Tg supérieure à 25°C (en particulier compris entre 30°C et 100°C), plus préférentiellement supérieure à 30°C (en particulier compris entre 30°C et 95°C) ;
- un point de ramollissement supérieur à 50°C (en particulier compris entre 50°C et 150°C) ;
- une masse molaire moyenne en nombre (Mn) comprise entre 300 et 2000 g/mol, préférentiellement entre 400 et 1500 g/mol ;
- un indice de polymolécularité (Ip) inférieur à 3, préférentiellement à 2 (rappel : Ip = Mw/Mn avec Mw masse molaire moyenne en poids).

Les résines plastifiante de haute Tg préférentielles ci-dessus sont bien connues de l'homme du métier et disponibles commercialement, par exemple vendues en ce qui concerne les :
- résines polylimonène : par la société DRT sous la dénomination "Dercolyte L120" (Mn=625 g/mol ; Mw=1010 g/mol ; Ip=1,6 ; Tg=72°C) ou par la société ARIZONA sous la dénomination "Sylvagum TR7125C" (Mn=630 g/mol; Mw=950 g/mol ; Ip=1,5 ; Tg=70°C) ;
- résines de copolymère coupe C5/ vinylaromatique, notamment coupe C5/ styrène ou coupe C5/ coupe C9 : par Neville Chemical Company sous les dénominations "Super Nevtac 78", "Super Nevtac 85" ou "Super Nevtac 99", par Goodyear Chemicals sous dénomination "Wingtack Extra", par Kolon sous dénominations "Hikorez T1095" et "Hikorez T1100", par Exxon sous dénominations "Escorez 2101" et "Escorez 1273" ;
- résines de copolymère limonène/ styrène : par DRT sous dénomination "Dercolyte TS 105" de la société DRT, par ARIZONA Chemical Company sous dénominations "ZT115LT" et "ZT5100".

Selon l'invention la résine plastifiante présentant une température de transition vitreuse supérieure à 20°C peut être choisie dans le groupe comprenant ou constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène et leurs mélanges. De préférence, la résine plastifiante est choisie dans le groupe comprenant ou constitué par les résines de copolymère (D)CPD/ vinylaromatique, les résines de copolymère (D)CPD/ terpène, les résines de copolymère terpène phénol, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, et leurs mélanges.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha-méthylstyrène, l'ortho-méthylstyrène, le méta-méthylstyrène, le para-méthylstyrène, le vinyle-toluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe C₉ (ou plus généralement d'une coupe C₈ à C₁₀).

Plus particulièrement, on peut citer les résines plastifiantes choisies dans le groupe constitué par les résines d'homopolymère (D)CPD, les résines de copolymère (D)CPD/ styrène, les résines de polylimonène, les résines de copolymère limonène/ styrène, les résines de copolymère limonène/ D(CPD), les résines de copolymère coupe C5/ styrène, les résines de copolymère coupe C5/ coupe C9, et les mélanges de ces résines.

Toutes les résines plastifiantes ci-dessus sont bien connues de l'homme du métier et disponibles commercialement, par exemple vendues par la société DRT sous la dénomination "Dercolyte" pour ce qui concerne les résines polylimonène, par la société Neville Chemical Company sous dénomination "Super Nevtac", par Kolon sous dénomination "Hikorez" ou par la société Exxon Mobil sous dénomination "Escorez" pour ce qui concerne les résines coupe C₅/ styrène ou résines coupe C₅/ coupe C₉, ou encore par la société Struktol sous dénomination "40 MS" ou "40 NS" (mélanges de résines aromatiques et/ou aliphatiques).

Avantageusement, le taux de résine plastifiante présentant une température de transition vitreuse supérieure à 20°C dans la composition de la bande de roulement selon l'invention est compris dans un domaine allant de 10 à 90 pce, de préférence de 20 à 70 pce, de préférence encore de 30 à 60 pce.

### II-3.2 Plastifiant liquide à 23°C

Bien que cela ne soit pas nécessaire à la mise en œuvre de la présente invention, le système plastifiant de la composition de caoutchouc de la bande de roulement du pneumatique selon l'invention peut comporter un plastifiant liquide à 23°C, dite à « basse Tg », c'est-à-dire qui par définition présente une Tg inférieure à -20°C, de préférence inférieur à -40°C. Selon l'invention, la composition peut optionnellement comprendre de 0 à 90 pce d'un plastifiant liquide à 23°C.

Lorsqu'un plastifiant liquide à 23°C est utilisé, son taux dans la composition de la bande de roulement selon l'invention peut être compris dans un domaine allant de 10 à 80 pce, de préférence de 20 à 70 pce.

Tout plastifiant liquide à 23°C (ou huile d'extension), qu'il soit de nature aromatique ou nonaromatique, connu pour ses propriétés plastifiantes vis-à-vis d'élastomères diéniques, est utilisable. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment aux résines plastifiantes qui sont par nature solides à température ambiante.

Conviennent particulièrement les plastifiants liquides à 23°C choisis dans le groupe comprenant ou constitué par les polymères diéniques liquides, les huiles polyoléfiniques, les huiles naphténiques, les huiles paraffiniques, les huiles DAE, les huiles MES *(Medium Extracted Solvates),* les huiles TDAE (*Treated Distillate Aromatic Extracts),* les huiles RAE *(Residual Aromatic Extract oils),* les huiles TRAE *(Treated Residual Aromatic Extract)* et les huiles SRAE *(Safety Residual Aromatic Extract oils),* les huiles minérales, les huiles végétales, les plastifiants éthers, les plastifiants esters, les plastifiants phosphates, les plastifiants sulfonates et les mélanges de ces plastifiants liquide à 23°C.

Par exemple, le plastifiant liquide à 23°C peut être une huile de pétrole, de préférence non aromatique. Un plastifiant liquide est qualifié de non aromatique dès lors qu'il présente une teneur en composés aromatiques polycycliques, déterminé avec l'extrait dans du DMSO selon la méthode IP 346, de moins de 3 % en poids, par rapport au poids total du plastifiant.

Le plastifiant liquide à 23°C peut également être un polymère liquide issus de la polymérisation d'oléfines ou de diènes, comme les polybutènes, les polydiènes, en particulier les polybutadiènes, les polyisoprènes (connus également sous l'appellation « LIR ») ou les copolymères de butadiène et d'isoprène, ou encore les copolymères de butadiène ou d'isoprène et de styrène ou les mélanges de ces polymères liquides. La masse molaire moyenne en nombre de tels polymères liquides est comprise préférentiellement dans un domaine allant de 500 g/mol à 50 000 g/mol, préférentiellement de 1 000 g/mol à 10 000 g/mol. A titre d'exemple peuvent être cités les produits « RICON » de SARTOMER.

Lorsque le plastifiant liquide à 23°C est une huile végétale, il peut s'agir par exemple d'une huile choisie dans le groupe comprenant ou constitué par les huiles de lin, carthame, soja, maïs, coton, navette, ricin, abrasin, pin, tournesol, palme, olive, noix de coco, arachide, pépin de raisin et les mélanges de ces huiles. L'huile végétale est préférentiellement riche en acide oléique, c'est-à-dire que l'acide gras (ou l'ensemble des acides gras si plusieurs sont présents) dont elle dérive, comporte de l'acide oléique selon une fraction massique au moins égale à 60%, encore plus préférentiellement selon une fraction massique au moins égale à 70%. A titre d'huile végétale, est utilisée avantageusement une huile de tournesol qui est telle que l'ensemble des acides gras dont elle dérive comprend l'acide oléique selon une fraction massique égale ou supérieure à 60%, de préférence à 70% et, selon un mode particulièrement avantageux de réalisation de l'invention, selon une fraction massique égale ou supérieure à 80%.

Selon un autre mode de réalisation particulier de l'invention, le plastifiant liquide est un triester choisi dans le groupe constitué par les triesters d'acide carboxylique, d'acide phosphorique, d'acide sulfonique et les mélanges de ces triesters.

A titre d'exemple de plastifiants phosphates, on peut citer ceux qui contiennent entre 12 et 30 atomes de carbone, par exemple le trioctyle phosphate. A titre d'exemples de plastifiants esters d'acide carboxylique, on peut citer notamment les composés choisis dans le groupe constitué par les trimellitates, les pyromellitates, les phtalates, les 1,2-cyclohexane dicarboxylates, les adipates, les azélates, les sébaçates, les triesters de glycérol et les mélanges de ces composés. Parmi les triesters ci-dessus, on peut citer notamment des triesters de glycérol, de préférence constitués majoritairement (pour plus de 50 %, plus préférentiellement pour plus de 80 % en poids) d'un acide gras insaturé en C₁₈, c'est-à-dire choisi dans le groupe constitué par l'acide oléique, l'acide linoléique, l'acide linolénique et les mélanges de ces acides. Le triester de glycérol est préféré. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour pneumatiques.

Lorsque le plastifiant liquide à 23°C est un plastifiant éther, il peut s'agir par exemple de polyéthylène glycol ou de polypropylène glycol.

De préférence, le plastifiant liquide à 23°C est choisi dans le groupe comprenant ou constitué par les huiles MES, les huiles TDAE, les huiles naphténiques, les huiles végétales et les mélanges de ces les mélanges de ces plastifiants liquide à 23°C. De préférence encore, le plastifiant liquide à 23°C est une huile végétale, de préférence une huile de tournesol.

### II-3.3 Résine plastifiante visqueuse à 20°C

Bien que cela ne soit pas nécessaire à la mise en œuvre de la présente invention, le système plastifiant de la composition de caoutchouc de la bande de roulement du pneumatique selon l'invention peut comporter une résine plastifiante visqueuse à 20°C, dite « de faible Tg », c'est-à-dire qui par définition présente une Tg comprise dans un domaine allant de -40°C à - 20°C. Selon l'invention, la composition peut optionnellement comprendre, en complément ou en substitution de tout ou partie du plastifiant liquide à 23°C, de 0 à 90 pce de résine plastifiante visqueuse à 20°C.

De préférence, la résine plastifiante visqueuse à 20°C présente au moins une quelconque, de préférence 2 ou 3, de préférence l'ensemble, des caractéristiques suivantes :
- une Tg comprise entre -40°C et 0°C, plus préférentiellement entre -30°C et 0°C et plus préférentiellement encore entre -20°C et 0°C ;
- une masse moléculaire moyenne en nombre (Mn) inférieure à 800 g/mol, de préférence inférieure à 600 g/mol et plus préférentiellement inférieure à 400 g/mol ;
- un point de ramollissement compris dans un domaine allant de 0 à 50°C, préférentiellement de 0 à 40°C, plus préférentiellement de 10 à 40°C, de préférence de 10 à 30°C ;
- un indice de polymolécularité (Ip) inférieur à 3, plus préférentiellement inférieur à 2 (rappel : Ip = Mw/Mn avec Mw masse moléculaire moyenne en poids).

Les résines plastifiantes visqueuses à 20°C préférentielles ci-dessus sont bien connues de l'homme du métier et disponibles commercialement, par exemple vendues en ce qui concerne les :
- résine aliphatique : par la société CRAY VALLEY sous la dénomination« Wingtack 10» (Mn=480 g/mol ; Mw=595 g/mol ; Ip=1.2 ; SP=10°C; Tg=-28°C),
- résines coumarone indène : par la société Rütgers Chemicals sous la dénomination « Novares C30 » (Mn=295 g/mol; Mw=378 g/mol; Ip=1.28; SP=25°C; Tg=-19°C);
- résines de coupe C9 : par la société Rütgers Chemicals sous la dénomination « Novares TT30 » (Mn=329 g/mol; Mw=434 g/mol; Ip=1.32; SP=25°C; Tg=-12°C).

Lorsqu'une résine plastifiante visqueuse à 20°C est utilisée, son taux dans la composition de la bande de roulement selon l'invention peut être compris dans un domaine allant de 10 à 80 pce, de préférence de 20 à 70 pce.

Très avantageusement, le taux total de plastifiant liquide à 23°C et de résine plastifiante visqueuse à 20°C est compris dans un domaine allant de 0 à 90 pce, de préférence de 10 à 80 pce, de préférence de 20 à 70 pce.

### II-3.4 Tg de la composition

L'homme du métier sait adapter la Tg de la composition de caoutchouc en ajustant le taux du système plastifiant.

De manière particulièrement avantageuse, le système plastifiant est présent en une quantité telle que la température de transition vitreuse (Tg) de la composition est comprise dans un domaine allant de -45°C à 0°C, de préférence de -25°C à -5°C.

La température de transition vitreuse Tg des compositions selon l'invention est déterminée sur un viscoanalyseur (Metravib VA4000), selon la norme ASTM D 5992-96. La mesure des propriétés dynamiques est réalisée sur un échantillon de composition réticulé, c'est dire cuit jusqu'à un taux de conversion d'au moins 90%, l'échantillon ayant la forme d'une éprouvette cylindrique ayant une épaisseur égale à 2 mm et une section égale à 78,5 mm². On enregistre la réponse de l'échantillon de mélange élastomérique à une sollicitation sinusoïdale en cisaillement simple alterné, ayant une amplitude crête-crête égale à 0,7 MPa et une fréquence égale à 10 Hz. On effectue un balayage en température à vitesse de montée en température constante de +1.5°C/min. Les résultats exploités sont généralement le module complexe de cisaillement dynamique G^{∗}, comprenant une partie élastique G' et une partie visqueuse G", et la perte dynamique tanδ, égale au rapport G"/G'. La température de transition vitreuse Tg est la température à laquelle la perte dynamique tanδ atteint un maximum lors du balayage en température.

### II-4 Système de réticulation

### II-4-1 Peroxyde organique

Selon l'invention, la composition de caoutchouc de la bande de roulement comprend au moins un peroxyde organique. Le peroxyde organique utilisé dans le procédé selon l'invention peut être tout peroxyde organique connu de l'homme de l'art.

Le peroxyde organique est de préférence choisi dans le groupe comprenant ou consistant en les peroxydes de dialkyle, les monoperoxycarbonates, les peroxydes de diacyle, les peroxycétales ou les peroxyesters.

De préférence, les peroxydes de dialkyle sont choisis dans le groupe comprenant ou consistant en le peroxyde de dicumyle, le peroxyde de di-t-butyle, peroxyde de t-butylcumyle, le 2,5-diméthyl-2,5-di(t-butylperoxy)hexane, le 2,5-diméthyl-2,5-di(t-amylperoxy)-hexane, le 2,5-diméthyl-2,5-di(t-butylperoxy)hexyne-3, le 2,5-diméthyl-2,5-di(t-amylperoxy)hexyne-3, α,α'-di-[(t-butyl-peroxy)isopropyl] benzène, le α,α'-di-[(t-amyl-peroxy)isopropyl] benzène, le peroxyde de di-t-amyle, le 1,3,5-tri-[(t-butylperoxy)isopropyl]benzène, le 1,3-diméthyl-3-(t-butylperoxy)butanol, et le 1,3-diméthyl-3-(t -amylperoxy) butanol.

Certains monoperoxycarbonates tels que le OO-tert-butyl-O-(2-éthylhexyl) monoperoxycarbonate, OO-tert-butyl-O-isopropyl monoperoxycarbonate et OO-tert-amyl-O-2-éthyl hexyl monoperoxycarbonate, peuvent également être utilisés.

Parmi les peroxydes de diacyles, le peroxyde préféré est le peroxyde de benzoyle.

Parmi les peroxycétales, les peroxydes préférés sont choisis dans le groupe comprenant ou consistant en le 1,1-di-(t-butylperoxy)-3,3,5-triméthylcyclohexane, le 4,4-di-(t-butylperoxy)valérate de n-butyle, le 3,3-di-(t-butylperoxy)butyrate d'éthyle, le 2,2-di-(t-amylperoxy)-propane, le 3,6,9-triethyl-3,6,9-trimethyl-1,4,7-triperoxynonane (ou peroxyde de méthyl éthyl cétone trimère cyclique), le 3,3,5,7,7-pentamethyl-1,2,4-trioxepane, le 4,4-bis(t-amylperoxy)valérate de n-butyle, le 3,3-di(t-amylperoxy)butyrate d'éthyle, le 1,1-di(t-butylperoxy)cyclohexane, le 1,1-di(t-amylperoxy)cyclohexane et leurs mélanges. De préférence, les peroxyesters sont choisis dans le groupe consistant en le tertbutylperoxybenzoate, le tert-butyleperoxy-2-ethylhexanoate et le tert-butyleperoxy-3,5,5-triméthylehexanoate.

En résumé, le peroxyde organique est, de manière particulièrement préférée, choisi dans le groupe constitué par le peroxyde de dicumyle, les peroxydes d'aryle ou de diaryle, le peroxyde de diacétyle, le peroxyde de benzoyle, le peroxyde de dibenzoyle, le peroxyde de ditertbutyle, le peroxyde de tertbutylcumyle, le 2,5-bis (tertbutylperoxy)-2,5-diméthylhexane, le n-butyl-4,4'-di(tert-butylperoxy) valérate, le OO-(t-butyl)-O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzene et leurs mélanges. De préférence encore le peroxyde organique est choisi dans le groupe constitué par dans le groupe consistant en le peroxyde de dicumyle, le n-butyl-4,4'-di(tert-butylperoxy)-valérate, le OO-(t-butyl) O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzene et leurs mélanges.

Le taux de peroxyde dans la composition peut être compris dans un domaine allant de 0,2 à 10 pce. Plus préférentiellement, la quantité de peroxyde dans la composition est comprise dans un domaine allant de 0,8 à 8 pce, de préférence de 1 à 8 pce, de préférence encore de 2 à 6 pce.

### II-4-2 Soufre

Par ailleurs, la composition de caoutchouc selon l'invention est avantageusement exempte de soufre en tant qu'agent de vulcanisation, ou en contenir moins de 0,3 pce et de préférence moins de 0,1 pce. Le soufre peut être du soufre moléculaire ou provenir d'un agent donneur de soufre, tel que les alkyl phénol disulfures (APDS). Très avantageusement, la composition de la bande de roulement selon l'invention est exempte de soufre en tant qu'agent de vulcanisation.

### II-4-3 Dérivé d'acrylate

Par ailleurs, la composition de caoutchouc de la bande de roulement selon l'invention est avantageusement exempte de dérivé d'acrylate de formule (I) :

**[X]p A** (I)

dans laquelle,
o [X]p correspond à un radical de formule (II) : 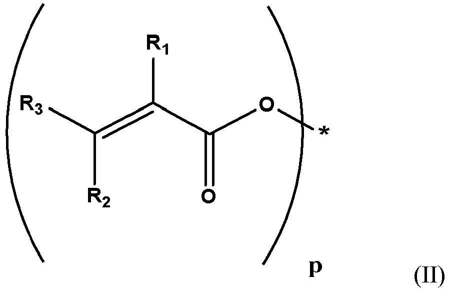 dans laquelle,
   ■ R₁, R₂ et R₃ représentent indépendamment un atome d'hydrogène ou un groupe hydrocarboné en C₁-C₈ choisi dans le groupe constitué par les groupes alkyles linéaires, ramifiés ou cycliques, les groupes alkylaryles, les groupes aryles et les aralkyles, et éventuellement interrompus par un ou plusieurs hétéroatomes, R₂ et R₃ pouvant former ensemble un cycle non aromatique,
   ■ (^{∗}) représente le point d'attachement du radical de formule (II) à A,
o A représente un atome appartenant au groupe constitué par les métaux alcalinoterreux ou les métaux de transition, un atome de carbone ou un groupement hydrocarboné en C₁-C₈,
o A comprenant p valences libres, p ayant une valeur allant de 2 à 4,
o étant entendu que les 2 à 4 radicaux X sont identiques ou différents,
ou en contient moins de 1 pce, de préférence moins de 0,8 pce. Très avantageusement, la composition de la bande de roulement selon l'invention est exempte du dérivé d'acrylate de formule (I) ci-dessus.

### II-5 Additifs divers

La composition de caoutchouc de la bande de roulement du pneumatique selon l'invention peut comporter également tout ou partie des additifs usuels habituellement utilisés dans les compositions d'élastomères pour pneumatiques, comme par exemple des résines renforçantes, des charges autres que celles précitées, des pigments, des agents de protection tels que cires anti-ozone, anti-ozonants chimiques, anti-oxydants, des agents anti-fatigue, bien connus de l'homme du métier.

### II-6 Préparation des compositions de caoutchouc

La composition de caoutchouc de la bande de roulement selon l'invention peut être fabriquée dans des mélangeurs appropriés, en utilisant deux phases de préparation successives bien connues de l'homme du métier :
- une première phase de travail ou malaxage thermomécanique (phase dite « non-productive »), qui peut être conduite en une seule étape thermomécanique au cours de laquelle on introduit, dans un mélangeur approprié tel qu'un mélangeur interne usuel (par exemple de type 'Banbury'), tous les constituants nécessaires, notamment la matrice élastomérique, la silice, les éventuels autres additifs divers, à l'exception du peroxyde. L'incorporation de la charge à l'élastomère, lorsqu'elle est présente, peut être réalisée en une ou plusieurs fois en malaxant thermomécaniquement. La phase non-productive est réalisée à haute température, jusqu'à une température maximale comprise entre 110°C et 200°C, de préférence entre 130°C et 185°C, pendant une durée généralement comprise entre 2 et 10 minutes.
- une seconde phase de travail mécanique (phase dite « productive »), qui est réalisée dans un mélangeur externe tel qu'un mélangeur à cylindres, après refroidissement du mélange obtenu au cours de la première phase non-productive jusqu'à une plus basse température, typiquement inférieure à 120°C, par exemple entre 40°C et 100°C.On incorpore alors le peroxyde, et le tout est alors mélangé pendant quelques minutes, par exemple entre 2 et 15 min.

La composition finale ainsi obtenue est ensuite calandrée par exemple sous la forme d'une feuille ou d'une plaque, notamment pour une caractérisation au laboratoire, ou encore extrudée sous la forme d'un semi-fini (ou profilé) de caoutchouc utilisable par exemple comme une bande de roulement de pneumatique ou comme couche interne de pneumatique.

La cuisson peut être conduite, de manière connue de l'homme du métier, à une température généralement comprise entre 130°C et 200°C, sous pression, pendant un temps suffisant qui peut varier par exemple entre 5 et 90 min en fonction notamment de la température de cuisson, du système de réticulation adopté, de la cinétique de réticulation de la composition considérée ou encore de la taille du pneumatique.

### II-7 Bande de roulement et pneumatique

De manière connue, la bande de roulement d'un pneumatique, qu'il soit destiné à équiper un véhicule de tourisme ou autre, comporte une surface de roulement destinée à être en contact avec le sol lorsque le pneumatique roule. La bande de roulement est pourvue d'une sculpture comprenant notamment des éléments de sculpture ou blocs élémentaires délimités par diverses rainures principales, longitudinales ou circonférentielles, transversales ou encore obliques, les blocs élémentaires pouvant en outre comporter diverses incisions ou lamelles plus fines. Les rainures constituent des canaux destinés à évacuer l'eau lors d'un roulage sur sol mouillé et les parois de ces rainures définissent les bords d'attaque et de fuite des éléments de sculpture, en fonction du sens du virage.

La présente invention a également pour objet un pneumatique pourvu d'une bande de roulement selon l'invention.

L'invention concerne particulièrement des pneumatiques destinés à équiper des véhicules à moteur de type tourisme et SUV ("Sport Utility Vehicles").

L'invention concerne les pneumatiques et produits semi-finis pour pneumatiques précédemment décrits, les articles en caoutchouc, tant à l'état cru (c'est à dire, avant cuisson) qu'à l'état cuit (c'est à dire, après réticulation ou vulcanisation).

### III- EXEMPLES

### III-1 Mesures et tests utilisés

### Propriétés dynamiques :

Les propriétés dynamiques G^{∗} et tan(δ)Max sont mesurées sur un viscoanalyseur (Metravib VA4000), selon la norme ASTM D5992-96. On enregistre la réponse d'un échantillon de composition vulcanisée (éprouvette cylindrique de 2 mm d'épaisseur et de 79 mm² de section), soumis à une sollicitation sinusoïdale en cisaillement simple alterné, à la fréquence de 10Hz, dans les conditions normales de température (23°C) selon la norme ASTM D 1349-09 pour les mesures de tan(δ)Max, ou bien à -10°C pour les mesures de G^{∗}. On effectue un balayage en amplitude de déformation de 0,1% à 50% (cycle aller), puis de 50% à 0,1% (cycle retour).

Les résultats exploités sont le module complexe de cisaillement dynamique G^{∗} à -10°C et le facteur de perte tan(δ) à 23°C. Sur le cycle retour, on enregistre la valeur du G^{∗} à 50% de déformation ainsi que le facteur de perte, noté tan(δ)Max.

Les résultats de tan(δ)Max à 23°C sont exprimés en base 100, la valeur 100 étant attribuée au témoin. Un résultat supérieur à 100 indique une performance améliorée (valeur absolue de tan inférieure), c'est-à-dire que la composition de l'exemple considéré traduit une moindre résistance au roulement de la bande de roulement comportant une telle composition.

Les résultats de G^{∗} à -10°C sont exprimés en base 100, la valeur 100 étant attribuée au témoin. Un résultat supérieur à 100 indique une performance améliorée (valeur absolue de G^{∗} à -10°C inférieure), c'est-à-dire que la composition de l'exemple considéré traduit une adhérence améliorée sur un sol enneigé de la bande de roulement comportant une telle composition.

### Plasticité Moonev

On utilise un consistomètre oscillant tel que décrit dans la norme française NF T 43-005 (1991). La mesure de plasticité Mooney se fait selon le principe suivant : la composition à l'état cru *(i.e.,* avant cuisson) est moulée dans une enceinte cylindrique chauffée à 100°C. Après une minute de préchauffage, le rotor tourne au sein de l'éprouvette à 2 tours/minute et on mesure le couple utile pour entretenir ce mouvement après 4 minutes de rotation. La plasticité Mooney (ML 1+4) est exprimée en "unité Mooney" (UM, avec 1 UM=0,83 Newton.mètre).

On rappelle que, de manière bien connue de l'homme du métier, plus la plasticité Mooney est faible, plus le matériau est facile à travailler. Bien entendu, en-deçà d'une certaine valeur (*e.g.*, 20 UM, le matériau devient trop liquide pour être utilisable, notamment pour fabriquer des bande de roulement de pneumatique.

### III-2 Préparation des compositions

Dans les exemples qui suivent, les compositions caoutchouteuses ont été réalisées comme décrit au point II.6 ci-dessus. En particulier, la phase « non-productive » a été réalisée dans un mélangeur de 0,4 litres pendant 3,5 minutes, pour une vitesse moyenne de palettes de 50 tours par minutes jusqu'à atteindre une température maximale de tombée de 160°C. La phase « productive » a été réalisée dans un outil à cylindre à 23°C pendant 5 minutes.

### III-3 Essais de compositions de caoutchouc

Les exemples présentés ci-dessous, ont pour objet de comparer la processabilité (Mooney), la résistance au roulement et l'adhérence sur sol enneigé d'une composition conforme à la présente invention (C1) avec une composition témoin (T1) de l'art antérieur qui ne diffère de C1 que par le taux de silice comme charge renforçante (le taux d'agent de couplage utilisé est maintenu à une teneur de 8% en poids par rapport au poids de silice). D'autres compositions conformes à l'invention (C2, C3, C4, C6) ont également été testées pour déterminer l'effet de différents élastomères diéniques fonctionnalisés, l'ajout de plastifiant liquide et un autre coupage de charge renforçante. Les formulations analysées (en pce) et les résultats obtenus sont présentés dans le Tableau 1 ci-après.

**Tableau 1**

| | **T1** | **C1** | **C2** | **C3** | **C4** | **C5** | **C6** |
|---|---|---|---|---|---|---|---|
| SBR 1 (a) | 100 | 100 | - | 85 | 50 | 100 | 100 |
| SBR 2 (b) | - | - | 57 | - | - | - | - |
| SBR 3 (c) | - | - | - | - | 50 | - | - |
| BR (d) | - | - | 43 | - | - | - | - |
| Caoutchouc naturel | - | - | - | 15 | - | - | - |
| Silice (e) | 110 | 70 | 70 | 70 | 70 | 70 | 45 |
| Noir de carbone (f) | 5 | 5 | 5 | 5 | 5 | 5 | 30 |
| Résine plastifiante (g) | 55 | 55 | 55 | 55 | 55 | 41 | 55 |
| Plastifiant liquide (h) | - | - | - | - | - | 14 | - |
| Peroxyde (i) | 4 | 4 | 4 | 4 | 4 | 4 | 4 |
| Anti-oxydant (j) | 3.5 | 3.5 | 3.5 | 3.5 | 3.5 | 3.5 | 3.5 |
| TMQ (k) | 1.5 | 1.5 | 1.5 | 1.5 | 1.5 | 1.5 | 1.5 |
| Cire anti-ozone (1) | 2.5 | 2.5 | 2.5 | 2.5 | 2.5 | 2.5 | 2.5 |
| Agent de couplage (m) | 8.8 | 5.6 | 5.6 | 5.6 | 5.6 | 5.6 | 3.6 |
| DPG (n) | 2.5 | 2.5 | 2.5 | 2.5 | 2.5 | 2.5 | 2.5 |
| Ac. stéarique (o) | 3 | 3 | 3 | 3 | 3 | 3 | 3 |
| ZnO (p) | 1.2 | 1.2 | 1.2 | 1.2 | 1.2 | 1.2 | 1.2 |
| | | | | | | | |
| Mooney (UM) | 62 | 41 | 32 | 36 | 38 | 40 | 41 |
| tan(δ)Max 23°C | 100 | 201 | 140 | 197 | 172 | 210 | 167 |
| G^{∗} -10°C | 100 | 268 | 237 | 263 | 136 | 300 | 244 |

| | | | | | | | |
|---|---|---|---|---|---|---|---|
| a) SBR 1 : SBR avec 3% de motif styrène et 13% de motif 1,2 de la partie butadiénique porteur d'une fonction amino-alkoxysilane en milieu de chaîne élastomère (Tg -88C) b) SBR2 : SBR (étoilé Sn) avec 26% de motif styrène et 24% de motif 1,2 de la partie butadiénique porteur fonction silanol en bout de chaîne élastomère (Tg -65°C) c) SBR 3 : SBR avec 24,5% de motif styrène et 24% de motif 1,2 de la partie butadiénique porteur fonction amino-alkoxysilane en milieu de chaîne élastomère (Tg -48°C) d) BR : Polybutadiène avec 0,5% de motif 1,2 et 97% de 1,4-cis (Tg = -108°C) e) Silice « Zeosil 1165 MP » de la société Rhodia type « HDS » f) Grade ASTM N234 (société Cabot) g) Résine en C5/C9 (« Résine ECR-373 » de la société ExxonMobil) h) huile TDAE (« Vivatec 500 » de la société Klaus Dahleke) i) 1,3(4)-bis(tert-butylperoxyisopropyl)benzene « Luperox F40MG » de la société Arkema) j) N-1,3-diméthylbutyl-N-phénylparaphénylènediamine (« Santoflex 6-PPD » de la société Flexsys) k) 2,2,4-trimethyl-1,2-dihydroquinoline (« TMQ » de la société Lanxess) 1) Cire anti-ozone (« VARAZON 4959 » de la société Sasol Wax) m) TESPT (« Si69 » de la société Degussa) n) Diphénylguanidine (« Perkacit » DPG de la société Flexsys) o) Stéarine (« Pristerene 4931 » de la société Uniqema) p) Oxyde de zinc (grade industriel - société Umicore) | | | | | | | |

Ces résultats montrent que la diminution de la quantité de silice comme charge renforçante dans des compositions comprenant majoritairement au moins un élastomère à base de polybutadiène, modifié avec un groupe fonctionnel capable d'interagir avec de la silice en tant que charge renforçante et un système de réticulation au peroxyde permet d'améliorer à la fois la processabilité, la résistance au roulement et l'adhérence sur sol enneigé. Par ailleurs, il a été constaté que la substitution d'une partie de la résine plastifiante par un plastifiant liquide à 23°C permet d'améliorer davantage la résistance au roulement et l'adhérence sur sol enneigé tout en conservant une bonne processabilité.

## Revendications

1. Bande de roulement pour pneumatique comprenant une composition de caoutchouc à base d'au moins :
- de 50 à 100 pce d'un premier élastomère diénique, le première élastomère diénique étant un élastomère à base de polybutadiène, modifié avec un groupe fonctionnel capable d'interagir avec de la silice en tant que charge renforçante,
- optionnellement de 0 à 50 pce d'un deuxième élastomère diénique différent du premier élastomère diénique,
- entre 40 et 90 pce de silice en tant que charge renforçante,
- un agent de couplage,
- un système plastifiant comprenant une résine plastifiante présentant une température de transition vitreuse supérieure à 20°C,
- un système de réticulation à base de peroxyde organique,
le taux total du premier élastomère diénique et du second élastomère diénique dans la composition étant compris dans un domaine allant de 80 à 100 pce.

2. Bande de roulement selon la revendication 1, le groupe fonctionnel capable d'interagir avec de la silice en tant que charge renforçante du premier élastomère diénique est au moins un groupe alkoxysilane lié à l'élastomère par son atome de silicium, le groupe alkoxysilane du premier élastomère diénique étant préférentiellement disposé à l'intérieur de la chaine élastomère du premier élastomère diénique.

3. Bande de roulement selon la revendication 2, dans laquelle le premier élastomère diénique porte en outre au moins une fonction amine primaire, secondaire ou tertiaire.

4. Bande de roulement selon la revendication 3, dans laquelle la fonction amine primaire, secondaire ou tertiaire est portée, directement ou par l'intermédiaire d'un groupe espaceur, par l'atome de silicium du groupe alkoxysilane du premier élastomère diénique.

5. Bande de roulement selon la revendication 3 ou 4, dans laquelle le groupe alkoxysilane portant la fonction amine primaire, secondaire ou tertiaire répond à l'une des formules (I) à (III) suivantes : 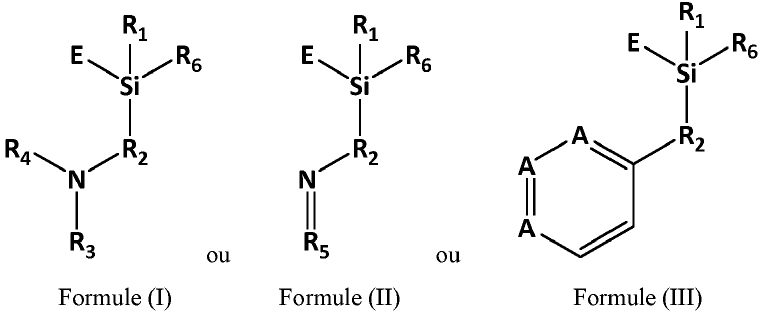 dans lesquelles :
- E désigne le premier élastomère diénique,
- R₁ et R₆, identiques ou différents, désignent le premier élastomère diénique ou un atome d'oxygène substitué par un atome d'hydrogène ou un radical alkyle, linéaire ou ramifié, en C₁₋₁₀, cycloalkyle en C₅₋₁₈, aryle en C₆₋₁₈ ou aralkyle en C₇₋₁₈ ;
- R₂ est un radical hydrocarboné divalent, linéaire ou ramifié, d'alkyle en C₁₋₁₀, d'aryle en C₆₋₁₈ ou d'aralkyle en C₇₋₁₈ ;
- R₃ et R₄, identiques ou différents, représentent un atome d'hydrogène ou un radical alkyl en C₁₋₁₀, sous réserve que lorsque l'un de R₃ et R₄ représente un atome d'hydrogène l'autre soit différent, ou alors R₃ et R₄ forment avec N auquel ils sont liés un hétérocycle contenant un atome d'azote et au moins un atome de carbone ;
- R₅ représente un radical alkylidène, linéaire ou ramifié, en C₁₋₁₀ ;
- les symboles A désignent, indépendamment les uns des autres, un atome d'azote ou un atome de carbone, sous réserve que l'un au moins des symboles A désigne un atome d'azote.

6. Bande de roulement selon la revendication 5, dans laquelle :
- R₁ représente atome d'oxygène substitué par un radical méthyl ou éthyle ; et/ou
- R₂ représente le radical éthane-1,2-diyl ou propane-1,3-diyl ; et/ou,
- R₃ et R₄, identiques ou différents, représentent un radical méthyle ou éthyle ; et/ou
- R₅ représente un radical alkylidène, linéaire ou ramifié, en C₄₋₆ ; et/ou
- un seul A désigne un atome d'azote et est situé en position méta ou para du cycle par rapport à -R₂; et/ou
- R₆ désigne le premier élastomère diénique.

7. Bande de roulement selon l'une quelconque des revendications précédentes, dans laquelle le premier élastomère diénique est un copolymère styrène-butadiène.

8. Bande de roulement selon la revendication 7, dans laquelle le premier élastomère diénique est un copolymère styrène-butadiène présentant au moins l'une des propriétés suivantes :
- il est un copolymère styrène-butadiène préparé en solution (SSBR),
- sa teneur massique en styrène par rapport au poids total du copolymère styrène-butadiène est comprise entre 1 et 15%, de préférence entre 1 et 4 %,
- sa teneur molaire en liaisons vinyliques de la partie butadiénique est comprise entre 4 et 25%, de préférence entre 10 et 15%,
- sa Tg est inférieure à -60°C, de préférence comprise entre -100°C et -80°C.

9. Bande de roulement selon l'une quelconque des revendications précédentes, dans laquelle le deuxième élastomère diénique est choisi dans le groupe constitué par les polybutadiènes, le caoutchouc naturel, les polyisoprènes de synthèse, les copolymères de butadiène, les copolymères d'isoprène et les mélanges de ces élastomères.

10. Bande de roulement selon l'une quelconque des revendications précédentes, dans laquelle le taux du premier élastomère diénique dans la composition est compris dans un domaine allant de 80 à 100 pce, et le taux du second élastomère diénique dans la composition est compris dans un domaine allant de 0 à 20 pce.

11. Bande de roulement selon l'une quelconque des revendications précédentes, dans laquelle la résine plastifiante présentant une température de transition vitreuse supérieure à 20°C est choisie dans le groupe constituée par les résines d'homopolymère ou copolymère de cyclopentadiène, les résines d'homopolymère ou copolymère de dicyclopentadiène, les résines d'homopolymère ou copolymère de terpène, les résines d'homopolymère ou copolymère de coupe C₅, les résines d'homopolymère ou copolymère de coupe C₉, les résines d'homopolymère ou copolymère d'alpha-méthyl-styrène et leurs mélanges.

12. Bande de roulement selon l'une quelconque des revendications précédentes, dans laquelle le taux de résine plastifiante présentant une température de transition vitreuse supérieure à 20°C dans la composition est compris dans un domaine allant de 10 à 90 pce, de préférence en 20 à 70 pce.

13. Bande de roulement selon l'une quelconque des revendications précédentes, dans laquelle le peroxyde organique est choisi dans le groupe constitué par le peroxyde de dicumyle, les peroxydes d'aryle ou de diaryle, le peroxyde de diacétyle, le peroxyde de benzoyle, le peroxyde de dibenzoyle, le peroxyde de ditertbutyle, le peroxyde de tertbutylcumyle, le 2,5-bis (tertbutylperoxy)-2,5-diméthylhexane, le n-butyl-4,4'-di(tert-butylperoxy) valérate, le OO-(t-butyl)-O-(2-éthylhexyl) monoperoxycarbonate, le tertio-butyl peroxyisopropylcarbonate, le tertio-butyl peroxybenzoate, le tert-butyl peroxy-3,5,5-triméthylhexanoate, le 1,3(4)-bis(tert-butylperoxyisopropyl)benzene et leurs mélanges.

14. Bande de roulement selon l'une quelconque des revendications précédentes, dans laquelle le taux de peroxyde organique dans la composition est compris dans un domaine allant de 0,8 à 8 pce, de préférence de 2 à 6 pce.

15. Pneumatique pourvu d'une bande de roulement selon l'une quelconque des revendications 1 à 14.

## Patentansprüche

1. Reifenlauffläche, umfassend eine Kautschukzusammensetzung auf Basis von mindestens:
- 50 bis 100 phe eines ersten Dienelastomers, wobei es sich bei dem ersten Dienelastomer um ein mit einer funktionellen Gruppe, die mit Kieselsäure als verstärkendem Füllstoff wechselwirken kann, modifiziertes Elastomer auf Basis von Polybutadien handelt,
- gegebenenfalls 0 bis 50 phe eines zweiten Dienelastomers, das von dem ersten Dienelastomer verschieden ist,
- zwischen 40 und 90 phe Kieselsäure als verstärkendem Füllstoff,
- einem Kupplungsmittel,
- einem Weichmachersystem, umfassend ein Weichmacherharz mit einer Glasübergangstemperatur von mehr als 20 °C,
- einem Vernetzungssystem auf Basis von organischem Peroxid,
wobei der Gesamtgehalt des ersten Dienelastomers und des zweiten Dienelastomers in der Zusammensetzung in einem Bereich von 80 bis 100 phe liegt.

2. Lauffläche nach Anspruch 1, wobei es sich bei der funktionellen Gruppe des ersten Dienelastomers, die mit Kieselsäure als verstärkendem Füllstoff wechselwirken kann, um mindestens eine Alkoxysilangruppe, die über ihr Siliciumatom an das Elastomer gebunden ist, handelt, wobei die Alkoxysilangruppe des ersten Dienelastomers bevorzugt im Inneren der Elastomerkette des ersten Dienelastomers angeordnet ist.

3. Lauffläche nach Anspruch 2, wobei das erste Dienelastomer außerdem mindestens eine primäre, sekundäre oder tertiäre Aminfunktion trägt.

4. Lauffläche nach Anspruch 3, wobei die primäre, sekundäre oder tertiäre Aminfunktion direkt oder über eine Spacergruppe von dem Siliciumatom der Alkoxysilangruppe des ersten Dienelastomers getragen wird.

5. Lauffläche nach Anspruch 3 oder 4, wobei die Alkoxysilangruppe, die die primäre, sekundäre oder tertiäre Aminfunktion trägt, einer der folgenden Formeln (I) bis (III) entspricht: 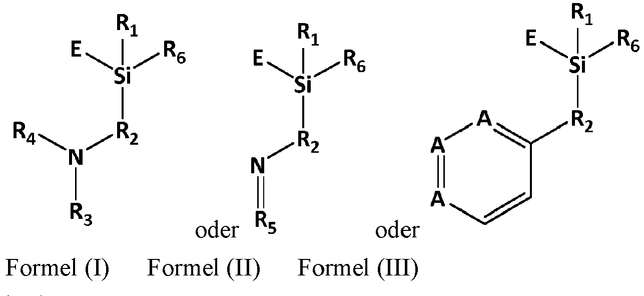 in denen:
- E für das erste Dienelastomer steht,
- R₁ und R₆, die gleich oder verschieden sind, für das erste Dienelastomer oder ein durch ein Wasserstoffatom oder einen linearen oder verzweigten C₁₋₁₀-Alkyl-, C₅₋₁₈-Cycloalkyl-, C₆₋₁₈-Aryl- oder C₇₋₁₈-Arylalkylrest substituiertes Sauerstoffatom stehen;
- R₂ für einen zweiwertigen, linearen oder verzweigten C₁₋₁₀-Alkyl-, C₆₋₁₈-Aryl- oder C₇₋₁₈-Arylalkylrest steht;
- R₃ und R₄, die gleich oder verschieden sind, für ein Wasserstoffatom oder einen C₁₋₁₀-Alkylrest stehen, mit der Maßgabe, dass dann, wenn eines von R₃ und R₄ für Wasserstoffatom steht, das andere verschieden ist, oder auch R₃ und R₄ mit N, an das sie gebunden sind, einen Heterocyclus, der mindestens ein Stickstoffatom und mindestens ein Kohlenstoffatom enthält, bilden;
- R₅ für einen linearen oder verzweigten C₁₋₁₀-Alkylidenrest steht;
- die Symbole A unabhängig voneinander für ein Stickstoffatom oder ein Kohlenstoffatom stehen, mit der Maßgabe, dass mindestens eines der Symbole A für ein Stickstoffatom steht.

6. Lauffläche nach Anspruch 5, wobei:
- R₁ für ein Sauerstoffatom, das durch einen Methyl- oder Ethylrest substituiert ist, steht und/oder
- R₂ für den Ethan-1,2-diyl- oder Propan-1,3-diylrest steht und/oder
- R₃ und R₄, die gleich oder verschieden sind, für einen Methyl- oder Ethylrest stehen und/oder
- R₅ für einen linearen oder verzweigten C₄₋₆-Alkylidenrest steht und/oder
- ein einziges A für ein Stickstoffatom steht und in meta- oder para-Position des Rings bezüglich -R₂ steht und/oder
- R₆ für das erste Dienelastomer steht.

7. Lauffläche nach einem der vorhergehenden Ansprüche, wobei es sich bei dem ersten Dienelastomer um ein Styrol-Butadien-Copolymer handelt.

8. Lauffläche nach Anspruch 7, wobei es sich bei dem ersten Dienelastomer um ein Styrol-Butadien-Copolymer mit mindestens einer der folgenden Eigenschaften handelt:
- es handelt sich um ein in Lösung hergestelltes Styrol-Butadien-Copolymer (SSBR),
- sein Massengehalt an Styrol, bezogen auf das Gesamtgewicht des Styrol-Butadien-Copolymers, liegt zwischen 1 und 15 %, vorzugsweise zwischen 1 und 4 %,
- sein molarer Gehalt an Vinylbindungen des Butadien-Teils liegt zwischen 4 und 25 %, vorzugsweise zwischen 10 und 15 %,
- seine Tg liegt unter -60 °C, vorzugsweise zwischen -100 °C und -80 °C.

9. Lauffläche nach einem der vorhergehenden Ansprüche, wobei das zweite Dienelastomer aus der Gruppe bestehend aus Polybutadienen, Naturkautschuk, synthetischen Polyisoprenen, Butadien-Copolymeren, Isopren-Copolymeren und Mischungen dieser Elastomere ausgewählt ist.

10. Lauffläche nach einem der vorhergehenden Ansprüche, wobei der Gehalt des ersten Dienelastomers in der Zusammensetzung in einem Bereich von 80 bis 100 phe liegt und der Gehalt des zweiten Dienelastomers in der Zusammensetzung in einem Bereich von 0 bis 20 phe liegt.

11. Lauffläche nach einem der vorhergehenden Ansprüche, wobei das Weichmacherharz, dass eine Glasübergangstemperatur von mehr als 20 °C aufweist, aus der Gruppe bestehend aus Cyclopentadien-Homopolymer-oder -Copolymerharzen, Dicyclopentadien-Homopolymer- oder - Copolymerharzen, Terpen-Homopolymer- oder -Copolymerharzen, Cs-Schnitt-Homopolymer- oder -Copolymerharzen, C₉-Schnitt-Homopolymer- oder -Copolymerharzen, alpha-Methylstyrol-Homopolymer- oder-Copolymerharzen und Mischungen dieser Harze ausgewählt ist.

12. Lauffläche nach einem der vorhergehenden Ansprüche, wobei der Gehalt an Weichmacherharz mit einer Glasübergangstemperatur von mehr als 20 °C in der Zusammensetzung in einem Bereich von 10 bis 90 phe, vorzugsweise 20 bis 70 phe, liegt.

13. Lauffläche nach einem der vorhergehenden Ansprüche, wobei das organische Peroxid aus der Gruppe bestehend aus Dicumylperoxid, Aryl-oder Diarylperoxiden, Diacetylperoxid, Benzoylperoxid, Dibenzoylperoxid, Di-tert-butylperoxid, tert-butylcumylperoxid, 2,5-Bis(tert-butylperoxy)-2,5-dimethylhexan, n-Butyl-4,4'-di(tert-butylperoxy)valerat, OO-(t-Butyl-O-(2-ethylhexyl)monoperoxycarbonat, tert-Butylperoxyisopropylcarbonat, tert-Butylperoxy-3,5, 5-trimethylhexanoat, 1,3 (4)-Bis(tert-Butylperoxyisopropyl)benzol und Mischungen davon ausgewählt ist.

14. Lauffläche nach einem der vorhergehenden Ansprüche, wobei der Gehalt an organischem Peroxid in der Zusammensetzung in einem Bereich von 0,8 bis 8 phe, vorzugsweise von 2 bis 6 phe, liegt.

15. Reifen mit einer Lauffläche nach einem der Ansprüche 1 bis 14.

## Claims

1. Tyre tread comprising a rubber composition based on at least:
- from 50 to 100 phr of a first diene elastomer, the first diene elastomer being a polybutadiene-based elastomer, modified with a functional group capable of interacting with silica as reinforcing filler,
- optionally from 0 to 50 phr of a second diene elastomer different from the first diene elastomer,
- between 40 and 90 phr of silica as reinforcing filler,
- a coupling agent,
- a plasticizing system comprising a plasticizing resin exhibiting a glass transition temperature of greater than 20°C,
- a crosslinking system based on organic peroxide,
the total content of the first diene elastomer and of the second diene elastomer in the composition being within a range extending from 80 to 100 phr.

2. Tread according to Claim 1, the functional group capable of interacting with silica as reinforcing filler of the first diene elastomer is at least one alkoxysilane group bonded to the elastomer by its silicon atom, the alkoxysilane group of the first diene elastomer being preferably positioned inside the elastomer chain of the first diene elastomer.

3. Tread according to Claim 2, wherein the first diene elastomer additionally bears at least one primary, secondary or tertiary amine functional group.

4. Tread according to Claim 3, wherein the primary, secondary or tertiary amine functional group is borne, directly or via a spacer group, by the silicon atom of the alkoxysilane group of the first diene elastomer.

5. Tread according to Claim 3 or 4, wherein the alkoxysilane group bearing the primary, secondary or tertiary amine functional group corresponds to one of the following formulae (I) to (III): 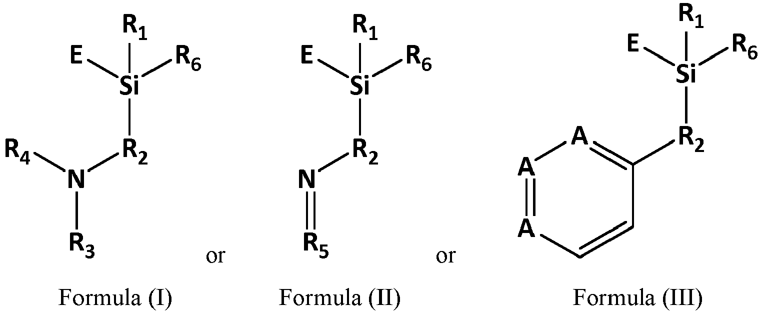 in which:
- E denotes the first diene elastomer,
- R₁ and R₆, which are identical or different, denote the first diene elastomer or an oxygen atom substituted by a hydrogen atom or a linear or branched C₁₋₁₀ alkyl, C₅₋₁₈ cycloalkyl, C₆₋₁₈ aryl or C₇₋₁₈ aralkyl radical;
- R₂ is a linear or branched divalent C₁₋₁₀ alkyl, C₆₋₁₈ aryl or C₇₋₁₈ aralkyl hydrocarbon radical;
- R₃ and R₄, which are identical or different, represent a hydrogen atom or a C₁₋₁₀ alkyl radical, provided that, when one of R₃ and R₄ represents a hydrogen atom, the other is different, or else R₃ and R₄ form, with N to which they are bonded, a heterocycle containing a nitrogen atom and at least one carbon atom;
- R₅ represents a linear or branched C₁₋₁₀ alkylidene radical;
- the symbols A denote, independently of one another, a nitrogen atom or a carbon atom, provided that at least one of the symbols A denotes a nitrogen atom.

6. Tread according to Claim 5, in which:
- R₁ represents an oxygen atom substituted by a methyl or ethyl radical; and/or
- R₂ represents the ethane-1,2-diyl or propane-1,3-diyl radical; and/or
- R₃ and R₄, which are identical or different, represent a methyl or ethyl radical; and/or
- R₅ represents a linear or branched C₄₋₆ alkylidene radical; and/or
- just one A denotes a nitrogen atom and is located in the meta or para position of the ring with respect to -R₂; and/or
- R₆ denotes the first diene elastomer.

7. Tread according to any one of the preceding claims, wherein the first diene elastomer is a styrene/butadiene copolymer.

8. Tread according to Claim 7, wherein the first diene elastomer is a styrene/butadiene copolymer exhibiting at least one of the following properties:
- it is a styrene/butadiene copolymer prepared in solution (SSBR),
- its content by weight of styrene, with respect to the total weight of the styrene/butadiene copolymer, is between 1% and 15%, preferably between 1% and 4%,
- its molar content of vinyl bonds of the butadiene part is between 4% and 25%, preferably between 10% and 15%,
- its Tg is less than -60°C, preferably between -100°C and -80°C.

9. Tread according to any one of the preceding claims, wherein the second diene elastomer is chosen from the group consisting of polybutadienes, natural rubber, synthetic polyisoprenes, butadiene copolymers, isoprene copolymers and mixtures of these elastomers.

10. Tread according to any one of the preceding claims, wherein the content of the first diene elastomer in the composition is within a range extending from 80 to 100 phr and the content of the second diene elastomer in the composition is within a range extending from 0 to 20 phr.

11. Tread according to any one of the preceding claims, wherein the plasticizing resin exhibiting a glass transition temperature of greater than 20°C is selected from the group consisting of cyclopentadiene homopolymer or copolymer resins, dicyclopentadiene homopolymer or copolymer resins, terpene homopolymer or copolymer resins, C₅ fraction homopolymer or copolymer resins, C₉ fraction homopolymer or copolymer resins, α-methylstyrene homopolymer or copolymer resins and their mixtures.

12. Tread according to any one of the preceding claims, wherein the content of plasticizing resin exhibiting a glass transition temperature of greater than 20°C in the composition is within a range extending from 10 to 90 phr, preferably in 20 to 70 phr.

13. Tread according to any one of the preceding claims, wherein the organic peroxide is selected from the group consisting of dicumyl peroxide, aryl or diaryl peroxides, diacetyl peroxide, benzoyl peroxide, dibenzoyl peroxide, di(tert-butyl) peroxide, tert-butyl cumyl peroxide, 2,5-bis(tert-butylperoxy)-2,5-dimethylhexane, n-butyl 4,4-di(tert-butylperoxy)valerate, OO-(t-butyl) O-(2-ethylhexyl) monoperoxycarbonate, tert-butylperoxy isopropyl carbonate, tert-butyl peroxybenzoate, tert-butyl peroxy-3,5,5-trimethylhexanoate, 1,3(4)-bis(tert-butylperoxyisopropyl)benzene and their mixtures.

14. Tread according to any one of the preceding claims, wherein the content of organic peroxide in the composition is within a range extending from 0.8 to 8 phr, preferably from 2 to 6 phr.

15. Tyre provided with a tread according to any one of Claims 1 to 14.
